# EUROPÄISCHE PATENTSCHRIFT

(11) **EP 1 327 922 B1**
(45) Veröffentlichungstag und Bekanntmachung des Hinweises auf die Patenterteilung: **07.04.2004**
(21) Anmeldenummer: 03000714.0
(22) Anmeldetag: 13.01.2003
(51) Int. Cl.: G05B 19/042, G05B 23/02, G05B 9/02

(54) **Sicherheitsschalteranordnung**
Safety switch arrangement
Arrangement avec un interrupteur de sécurité

(30) Priorität: 14.01.2002 DE 10201212
(43) Veröffentlichungstag der Anmeldung: 16.07.2003
(73) Patentinhaber: Leuze electronic GmbH + Co KG, 73277 Owen/Teck (DE)
(72) Erfinder: Wiesgickl, Bernhard, 92249 Vilseck (DE); Knaus, Karsten, 73061 Ebersbach (DE); Müller, Bernhard, Dr., 71083 Herrenberg (DE)
(74) Vertreter: Ruckh, Rainer Gerhard, Dr.

(56) Entgegenhaltungen:
- EP-A- 1 054 309
- DE-A- 4 412 653
- DE-A- 19 814 102
- DE-A- 19 815 147
- DE-A- 19 909 091
- DE-A- 19 927 635
- KRIESEL W ET AL: "ASI IM UEBERBLICK" , AKTUATOR SENSOR INTERFACE FUER DIE AUTOMATION, XX, XX, PAGE(S) 11-60 XP002062938 * das ganze Dokument *

## Beschreibung

Die Erfindung betrifft eine Sicherheitsschalteranordnung gemäß dem Oberbegriff des Anspruchs 1.

Derartige Sicherheitsschalteranordnungen werden insbesondere zum sicheren Ein- und Ausschalten von Arbeitsgeräten eingesetzt, die in sicherheitskritischen Applikationen eingesetzt werden. Beispiele für derartige Arbeitsgeräte sind Pressen, Abkantmaschinen und dergleichen. Bei derartigen Arbeitsgeräten werden Gefahrenbereiche mittels Sensoren und dergleichen überwacht, um Gefährdungen von Bedienpersonen auszuschließen. Eine Freigabe eines Arbeitsgerätes erfolgt über die jeweilige Sicherheitsschalteranordnung nur dann, wenn sich kein Objekt bzw. keine Person im jeweiligen Gefahrenbereich befindet.

Bei komplexen Anlagen werden typischerweise eine Vielzahl von Sensoren und Aktoren zum Betrieb und zur Überwachung derartiger Arbeitsgeräte benötigt.

Die DE 198 15 147 A1 betrifft eine Anordnung von Sensoren zur Überwachung eines Arbeitsgerätes, welches in Abhängigkeit der Schaltzustände der Sensoren in Betrieb setzbar ist, wobei die Sensoren Slaves eines nach dem Master-Slave-Prinzip arbeitenden Bussystems bilden, welches von einer den Master bildenden Steuereinheit gesteuert ist. An das Bussystem ist eine redundante Auswerteeinheit angeschlossen, welche fortlaufend die über das Bussystem übertragenen Signale abhört. In der Auswerteeinheit werden aus den Signalen der Sensoren, welchen eine individuelle Kodierung aufgeprägt ist, deren Schaltzustände ermittelt. Nur bei fehlerfreier Identifizierung der Kodierung wird das Arbeitsgerät über die Auswerteeinheit in Betrieb gesetzt.

Die redundante Auswerteeinheit dieser Anordnung bildet einen Sicherheitsmonitor. Dieser Sicherheitsmonitor ermittelt zentral aus den Kodierungen der Steuersignale die Schaltzustände der Sensoren, wobei dann in Abhängigkeit dieser Schaltzustände die Aktivierung oder Deaktivierung eines Arbeitsgerätes zentral gesteuert wird.

Ausgehend von diesem Stand der Technik liegt der Erfindung die Aufgabe zugrunde eine Sicherheitsschalteranordnung mit einer erweiterten Funktionalität bereitzustellen.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Die Erfindung weist eine Sicherheitsschalteranordnung mit einer vorgegebenen Anzahl von Schaltsignalen generierenden Ausgangsstufen auf, wobei in Abhängigkeit der Schaltsignale an die Ausgangsstufen angeschlossene Arbeitsgeräte aktivierbar oder deaktivierbar sind. Die Ausgangsstufen bilden Slaves eines nach dem Master-Slave-Prinzip arbeitenden Bussystems, welchem ein Sicherheitsmonitor zum Abhören der über das Bussystem übertragenen Signale zugeordnet ist. Die Ausgangsstufen sind in Abhängigkeit von im Sicherheitsmonitor hinterlegten Codes steuerbar, wobei auf einen vom Master an den Sicherheitsmonitor gesendeten Master-Request-Aufruf ein Code als Antwort von dem Sicherheitsmonitor an den Master gesendet und von den Slaves mitgehört und dabei in diese eingelesen wird, und wobei in den jeweiligen Slaves der empfangene Code kontrolliert wird. Das Ergebnis der Kontrolle wird als Antwort auf einen zweiten Master-Request-Aufruf des Masters an den jeweiligen Slave an diesen zurückgesendet und vom Monitor mitgehört.

Bei der erfindungsgemäßen Sicherheitsschalteranordnung sind mehrere Ausgangsstufen und gegebenenfalls weitere Eingangsstufen und/oder Ein-/Ausgangsstufen als Slaves an ein Master-Slave-Bussystem angeschlossen. Der Master des Master-Slave-Bussystems übernimmt in bekannter Weise die Steuerung des Bussystems in dem dieser zyklisch die einzelnen Slaves als Busteilnehmer abfragt.

Hierzu sind den einzelnen Slaves individuelle Adressen zugewiesen. Unter diesen Adressen werden die Slaves nacheinander vom Master abgefragt, wobei die einzelnen Slaves auf die Abfragen Antworten an den Master zurücksenden.

Erfindungsgemäß ist der Sicherheitsmonitor unter wenigstens einer Adresse an dieses Bussystem angeschlossen, wobei von diesem aus sämtliche sicherheitsrelevanten Funktionen der Sicherheitsschalteranordnung gesteuert bzw. überwacht werden. Dabei weist der Sicherheitsmonitor selbst vorzugsweise einen redundanten Aufbau auf, um das geforderte Sicherheitsniveau der Sicherheitsschalteranordnung zu erfüllen.

Die Aktivierung oder Deaktivierung des oder jedes an die Sicherheitsschalteranordnung angeschlossenen Arbeitsgerätes erfolgt dezentral über die Ausgangsstufen, die als Slaves im Bussystem integriert sind. Die Aktivierung des oder jedes Arbeitsgerätes erfolgt über Schaltsignale, die in den Ausgangsstufen generiert werden.

Die Schaltsignale wiederum werden in Abhängigkeit von individuellen Codes generiert, die über den Sicherheitsmonitor in die Ausgangsstufen eingegeben werden. Dabei gibt der Sicherheitsmonitor unter seiner Adresse diese Codes auf das Bussystem, welche im einfachsten Fall von allen Ausgangsstufen mitgehört werden. Die auf diese Weise in die Ausgangsstufen eingegebenen Codes werden in diesen mit dort abgespeicherten Sollwerten verglichen. Je nachdem, ob in den Ausgangsstufen eine Übereinstimmung der einzelnen Codes mit den Sollwerten festgestellt wird oder nicht, wird von den Ausgangsstufen als Rückantwort jeweils ein positives oder negatives Kontrollergebnis zurückgesandt, wobei die Rückantworten vom Sicherheitsmonitor registriert werden. Der Sicherheitsmonitor überprüft fortlaufend die Kontrollergebnisse der Slaves. Stellt dabei der Sicherheitsmonitor ein Abweichen wenigstens eines Kontrollergebnisses von einem vorgegebenen Sollverhalten fest, leitet der Sicherheitsmonitor vordefinierte Maßnahmen ein.

Deaktiviert beispielsweise eine Ausgangsstufe aufgrund einer Störung ein Arbeitsgerät, so wird diese Störung im Sicherheitsmonitor dann erkannt, wenn aufgrund der Störung das positive Kontrollsignal der Ausgangsstufe ausbleibt. In der Ausgangsstufe ist vorzugsweise eine Wiederanlaufsperre integriert, die eine neuerliche Aktivierung der Arbeitsgerätes verhindert. Die Ausgangsstufe sorgt damit dafür, dass das Arbeitsgerät im sicheren Zustand verbleibt. Damit arbeitet das Gesamtsystem aller Ausgangsstufen nicht entsprechend der Sollwertvorgaben, die im Sicherheitsmonitor hinterlegt sind. Der Sicherheitsmonitor erkennt dies anhand des ausbleibenden positiven Kontrollergebnisses der entsprechenden Ausgangsstufe. Prinzipiell kann die Reaktion des Sicherheitsmonitors darin bestehen, unmittelbar die Aussendung der Codes an die Ausgangsstufen zu beenden, um dadurch sämtliche Arbeitsgeräte zu deaktivieren. Dies entspricht einem globalen Not-Stopp für das Gesamtsystem.

Alternativ kann über den Sicherheitsmonitor die Aktivierung der noch nicht deaktivierten Arbeitsgeräte aufrechterhalten werden, bis beispielsweise über den Master bzw. eine an diesen angeschlossene Steuerung die Arbeitsgeräte kontrolliert abgebremst bzw. in eine Ruheposition gebracht werden.

Nach der Deaktivierung sämtlicher Arbeitsgeräte werden die Wiederanlaufsperren aller Ausgangsstufen durch einen regulären Neustart aufgehoben.

Prinzipiell kann die Reaktion des Sicherheitsmonitors auf ein Ausbleiben des positiven Kontrollergebnisses der betreffenden Ausgangsstufe so ausgebildet sein, dass deren Wiederanlaufsperre wieder aufgehoben wird, ohne die restlichen Arbeitsgeräte zu deaktivieren.

Generell können bei der erfindungsgemäßen Sicherheitsschalteranordnung dezentral über die Ausgangsstufen ein oder mehrere Arbeitsgeräte freigegeben werden, wobei durch die Kontrollfunktion des Sicherheitsmonitors die für das Sicherheitsniveau geforderte sichere Datenübertragung über das Bussystem gewährleistet ist. Zur Erhöhung des Sicherheitsniveaus weisen die Ausgangsstufen selbst vorzugsweise auch einen redundanten Aufbau auf.

In einer vorteilhaften Ausführungsform der Erfindung können unterschiedliche Gruppen von Ausgangsstufen über den Sicherheitsmonitor mit unterschiedlichen Codes angesteuert werden, so dass insbesondere verschiedene Arbeitsgeräte, die von den einzelnen Ausgangsstufen angesteuert werden, individuell aktiviert oder deaktiviert werden können. Prinzipiell können auch mehrere Sicherheitsmonitore zur Ansteuerung verschiedener Gruppen von Ausgangsstufen vorgesehen sein.

Weiterhin kann die Funktionalität der Sicherheitsschalteranordnung derart erweitert sein, dass über die im Sicherheitsmonitor hinterlegten Codes verschiedenartige Schaltsignale generiert werden.

In einer vorteilhaften Weiterbildung der Erfindung können als Slaves nicht nur Ausgangsstufen sondern auch Eingangsstufen oder Ein-/Ausgangsstufen an das Bussystem angeschlossen sein.

Diese Eingangsstufen oder Ein-/Ausgangsstufen generieren Eingangssignale, die von den entsprechenden Slaves auf das Bussystem ausgegeben werden und dabei von dem Sicherheitsmonitor mitgehört werden.

Anhand dieser Eingangssignale können vorteilhaft im Sicherheitsmonitor verschiedene Codes ausgewählt werden, um damit in Abhängigkeit der Eingangssignale die Ausgangsstufen anzusteuern.

Die Erfindung wird im Nachstehenden anhand der Zeichnungen erläutert. Es zeigen:
- Figur 1: Schematische Darstellung eines Ausführungsbeispiels der erfindungsgemäßen Sicherheitsschalteranordnung.
- Figur 2: Erste Ausführungsform der Datenübertragung zwischen Komponenten einer Sicherheitsschalteranordnung gemäß Figur 1.
- Figur 3: Zweite Ausführungsform der Datenübertragung zwischen Komponenten einer Sicherheitsschalteranordnung gemäß Figur 2.
- Figur 4: Ausführungsform der Datenüberübertragung zwischen Komponenten einer weiteren Sicherheitsschalteranordnung.

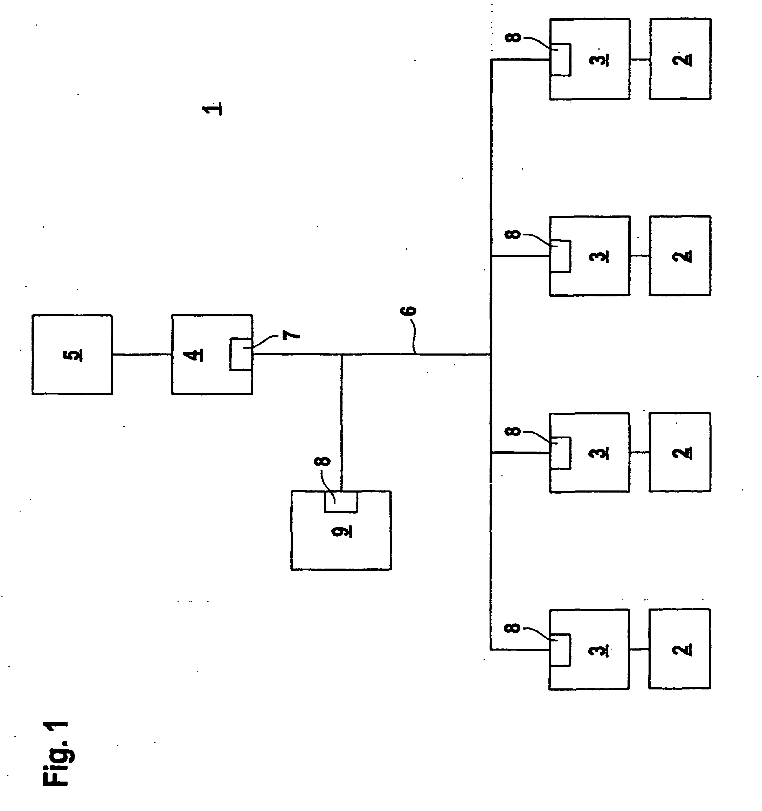

Figur 1 zeigt schematisch den Aufbau einer Sicherheitsschalteranordnung 1. Die Sicherheitsschalteranordnung 1 besteht im Wesentlichen aus einem nach dem Master-Slave-Prinzip arbeitenden Sensor-Aktor-Bussystem und dient zum Aktivieren und Deaktivieren einer Anzahl von Arbeitsgeräten 2. Die Arbeitsgeräte 2 bestehen im vorliegenden Fall von einer Anordnung von Motoren, mit welchen ein sicherheitsrelevanter Prozess gesteuert wird.

Die Motoren werden jeweils von einer Ausgangsstufe 3 angesteuert. Im vorliegenden Fall sind die Ausgangsstufen 3 jeweils von einem Aktor, insbesondere einem oder mehreren Relais gebildet.

Die Ausgangsstufen 3 bilden Slaves des Bussystems. Das Bussystem wird von einem Master 4 zentral gesteuert, welcher wiederum an eine Steuerung, insbesondere eine SPS-Steuerung 5 angeschlossen ist. Der Master 4 ist von einer Steuerschaltung gebildet. Der Master 4 und die Slaves sind über Busleitungen 6 miteinander verbunden. Die Stromversorgung des so gebildeten Sensor-Aktor-Bussystems erfolgt über ein nicht dargestelltes Netzteil.

Der Master 4 fragt die einzelnen Slaves unter vorgegebenen Adressen zyklisch ab, worauf jeder Slave eine Antwort an den Master 4 sendet.

Im vorliegenden Fall ist das Bussystem vom ASi-Bussystem gebildet. Das ASi-Bussystem ist insbesondere für den Anschluss von binären Sensoren und Aktoren konzipiert. Die Funktionsweise des ASi-Bussystems ist in "ASI - Das Aktuator Sensor Interface für die Automation", Werner Kriesel, Otto W. Madelung, Carl Hanser Verlag, 1994 beschrieben, dessen Inhalt in den Offenbarungsgehalt dieser Anmeldung miteinbezogen wird

Beim ASi-Bussystem besteht ein Masteraufruf (master request MR) aus einem Startbit, einer 5 Bitbreiten Adresse, 2 Bit Steuerinformation, 4 Bit Nutzdaten sowie jeweils einem Paritäts- und Stopp-Bit. Die zugehörige Slaveantwort (slave response SR) enthält ein Start-Bit, 4 Bit Nutzdaten sowie jeweils ein Paritäts- und Stopp-Bit. Ein Slave überprüft den empfangenen Masteraufruf anhand vorgegebener ASi-spezifischer Kodierungsregeln. Erkennt der Slave einen gültigen Masteraufruf, so sendet er eine entsprechende Antwort. In allen anderen Fällen antwortet er nicht. Ebenso verwirft der Master 4 eine Slaveantwort, wenn sie den entsprechenden Kodierungsregeln nicht entspricht.

Die Daten sind Manchester-kodiert und werden als alternierende, sin²-förmige Spannungsimpulse über die Busleitungen 6 übertragen.

Hierzu ist dem Master 4 eine Analogschaltung 7 nachgeordnet, welche ein jeweils nicht dargestelltes Sendeelement und ein Empfangselement aufweist. Im Sendeelement werden die binären Daten eines Masteraufrufs in eine Folge von sin²-förmigen Spannungsimpulse umgewandelt. Diese Signale werden über die Busleitungen 6 an die Slaves gesendet. Die von den Slaves über die Busleitungen 6 an den Master 4 gesendeten Signale werden in dem Empfangselement in binäre Datenfolgen umgewandelt.

Jeder Slave weist einen Schnittstellenbaustein 8 auf, der in dem vorliegenden Beispiel von einem Asi-IC gebildet ist. Im Schnittstellenbaustein 8 werden die über die Busleitung 6 empfangenen Folgen von sin²-förmigen Spannungsimpulsen in binäre Daten gewandelt. Des weiteren wird im Schnittstellenbaustein 8 die in Form von binären Daten vorliegende Slaveantwort in eine Folge von sin²-förmigen Spannungsimpulsen und über die Busleitungen 6 an den Master 4 gesendet.

Zur Überprüfung der über die Busleitungen 6 gesendeten Signale ist ein redundanter Sicherheitsmonitor 9 mit zwei sich überwachenden Rechnereinheiten an das Bussystem angeschlossen. Die Rechnereinheiten sind vorzugsweise von identisch aufgebauten Mikroprozessoren gebildet. Der Sicherheitsmonitor 9 stellt einerseits einen rein passiven Busteilnehmer dar, der fortlaufend die auf den Busleitungen 6 übertragenen Signale abhört. Andererseits besitzt der Sicherheitsmonitor 9 einen Schnittstellenbaustein 8, wodurch dieser als Slave Signale auf das Bussystem ausgeben kann.

Prinzipiell sind auch Konfigurationen möglich, bei welchen der Master 4 im Sicherheitsmonitor 9 integriert ist. Weiterhin können prinzipiell auch mehrere Sicherheitsmonitore 9 vorgesehen sein.

Bei der Sicherheitsschalteranordnung 1 übernimmt der Master 4 allein die Steuerung der Funktionen des Bussystems. Sämtliche sicherheitsrelevanten Funktionen werden dagegen von dem Sicherheitsmonitor 9 übernommen. Der Master 4 weist einen einkanaligen Aufbau auf.

Die Ausgangsstufen 3 als Slaves des Bussystems dienen zum Aktivieren und Deaktivieren der Arbeitsgeräte 2. Damit erfüllen die Ausgangsstufen 3 sicherheitsrelevante Funktionen und weisen typischerweise einen redundanten Aufbau auf.

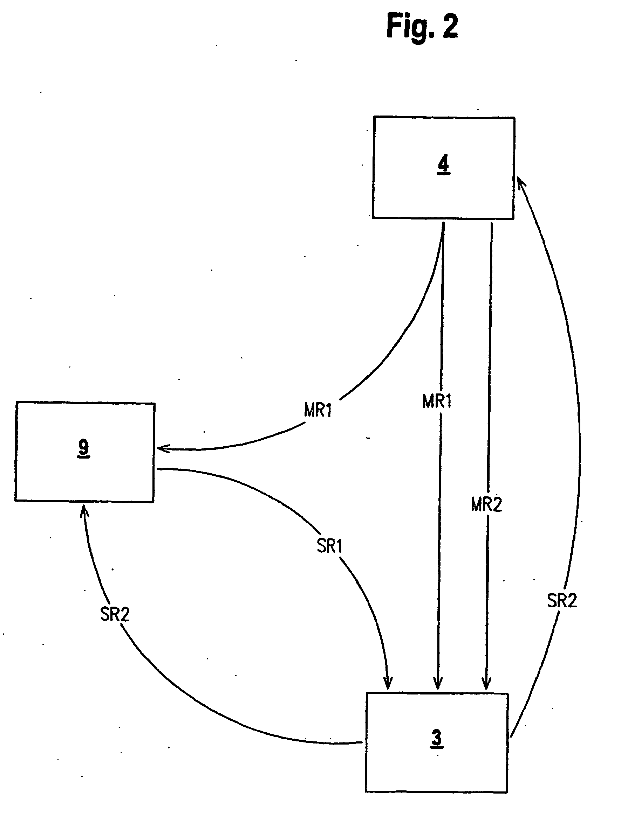

In Figur 2 ist das Schema der Datenübertragung der einzelnen Komponenten der Sicherheitsschalteranordnung 1 gemäß Figur 1 dargestellt, wobei der Übersichtlichkeit halber nur eine der Ausgangsstufen 3 dargestellt ist.

In den Ausgangsstufen 3 sind als Sollwerte mehrere Codes abgespeichert, die unterschiedliche Schaltsignale für das nachgeordnete Arbeitsgerät 2 kodieren. Die Codes bestehen im vorliegenden Fall jeweils aus einer Folge von acht Ziffern. Die Codes sind derart aufgebaut, dass ein erster Code eine Primärfolge von acht Ziffern bildet. Die restlichen Codes bilden Sekundärfolgen, die durch Abwandlungen der Reihenfolge der Ziffern der Primärfolge von dieser abgeleitet sind.

Im vorliegenden Ausführungsbeispiel ist das Arbeitsgerät 2 von einem Motor gebildet. Dementsprechend kodieren die Codes folgende Schaltsignale für den Motor:

| | |
|---|---|
| Primärfolge | Motor ein (Normalbetrieb) |
| | |
| 1. Sekundärfolge | Motor ein (bei reduzierter Geschwindigkeit) |
| | |
| restliche Sekundärfolgen | Motor aus |

Vor der Inbetriebnahme der Sicherheitsschalteranordnung 1 erfolgt eine Zuordnung der Ausgangsstufen 3 zu den gewünschten Ausgängen des Sicherheitsmonitors 9. Dann werden die für die verschiedenen Aufgaben verwendeten Codes zwischen den Kommunikationspartnern vereinbart.

Vor der Inbetriebnahme wird dabei den Ausgangsstufen 3 bekannt gemacht, unter welcher Adresse der Sicherheitsmonitor 9 den jeweiligen Code übertragen wird.

Die Codes umfassen im vorliegenden Fall jeweils acht Ziffern. Jeder zwischen einem Master 4 und einem Slave über die Busleitungen 6 übertragene Aufruf weist neben der Adresse ein Nutzdatenfeld von 4 Bit auf, in welchem der Code übertragen wird. Daher muss der achtstellige Code in einzelne Datenstränge von 4 Bit aufgeteilt werden und sukzessiv in mehreren Aufrufen über das Bussystem gesendet werden. Dementsprechend besteht der SR2-Aufruf aus mehreren einzelnen Aufrufen. Der Übersichtlichkeit halber wird im Folgenden eine derartige Serie von Aufrufen wie der SR2-Aufruf verkürzt als einzelner Aufruf dargestellt.

Während der auf den Einlernvorgang folgenden Betriebsphase des Bussystems wird die Ausgangsstufe 3 gemäß dem in Figur 2 dargestellten Schema angesteuert.

Der Master 4 sendet an den Sicherheitsmonitor 9 einen ersten Master-Request-Aufruf MR1. Da die sicherheitsrelevanten Informationen bildenden Codes im Sicherheitsmonitor 9 hinterlegt sind, enthält dieser Aufruf MR1 noch keinen Code für die Ausgangsstufen 3. Der Aufruf MR1 wird von dem Sicherheitsmonitor 9 beantwortet. Dabei enthält die Antwort SR1 einen Code zur Ansteuerung der Ausgangsstufe 3. Der Aufruf MR1 und die Antwort SR1 werden von der Ausgangsstufe 3 mitgehört, wodurch der Code in die Ausgangsstufe 3 eingelesen wird.

Bei der Anordnung gemäß Figur 1 sind mehrere identische Ausgangsstufen 3 vorgesehen. In diesem Fall wird die Antwort SR1 von allen Ausgangsstufen 3 mitgehört.

Der über die Antwort SR1 eingelesene Code wird in der Ausgangsstufe 3 mit den abgespeicherten Sollwerte Codes verglichen. Bei Übereinstimmung des eingelesenen Codes mit einem der abgespeicherten Codes wird ein positives Kontrollergebnis generiert. Ansonsten wird ein negatives Kontrollergebnis generiert.

Auf den Master-Request-Aufruf MR1 folgt nun ein zweiter Master-Request-Aufruf MR2 an die Ausgangsstufe 3. Die Antwort SR2 hierauf enthält das Kontrollergebnis, wobei die Antwort zum Sicherheitsmonitor 9 mitgehört wird.

Durch die Rückmeldung SR2 auf einen mit dem Aufruf SR1 eingelesenen Code kann die Funktionsfähigkeit der Ausgangsstufen 3 zyklisch überwacht werden.

Die Schaltsignale, die auf diese Weise an die Ausgangsstufen 3 eingegeben werden, stellen sicherheitsrelevante Signale dar, anhand derer der Motor im Normalbetrieb oder im reduzierten Betrieb eingeschaltet oder ausgeschaltet wird. Nicht sicherheitsrelevante Signale wie zum Beispiel die Vorgabe der genauen Motorgeschwindigkeit erfolgen über die SPS-Steuerung 5 des Bussystems gemäß Figur 1 und können zweckmäßig mit den MR2-Aufrufen übertragen werden. Damit ergibt sich das Ausgangssignal einer Ausgangsstufe 3 als Kombination eines im Sicherheitsmonitor 9 generierten Freigabesignals, welches vom Schaltsignal gebildet ist, und eines den Betrieb des Arbeitsgerätes 2 steuernden Steuersignals von der SPS-Steuerung.

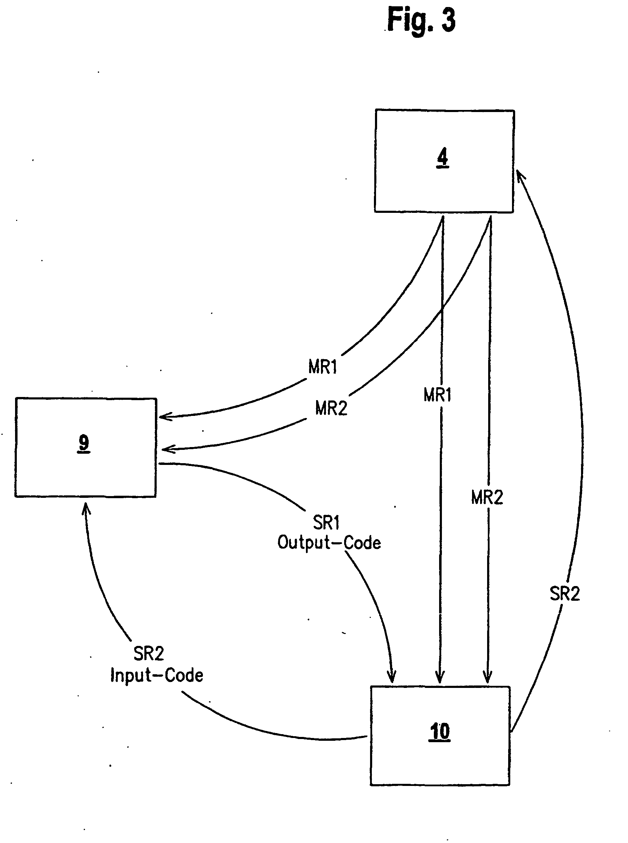

Figur 3 zeigt eine Modifikation der Anordnung gemäß Figur 2. Im Unterschied zur Anordnung gemäß Figur 2 ist als Slave keine Ausgangsstufe 3 sondern eine Ein-/Ausgangsstufe 10 vorgesehen.

Eine derartige Ein-/Ausgangsstufe 10 kann zum Beispiel von einem Lichtgitter gebildet sein. Das Lichtgitter weist mehrere Lichtschranken auf, deren Lichtstrahlen Strahlachsen bilden. Die Strahlachsen definieren einen in einer Ebene liegenden Überwachungsbereich innerhalb dessen Objekte erfassbar sind. Mit einem derartigen Lichtgitter kann ein Gefahrenbereich an einem Arbeitsgerät 2, beispielsweise einer Abkantpresse, überwacht werden. Je nachdem ob ein Objekt im Überwachungsbereich erkannt wird oder nicht, wird ein entsprechendes Objektfeststellungssignal im Lichtgitter generiert. Dieses bildet das Ausgangssignal, welches zur Generierung des Schaltsignals für das Arbeitsgerät 2 dient. Dabei wird das Arbeitsgerät 2 nur dann aktiviert, wenn sich kein Objekt im Überwachungsbereich befindet. Ansonsten wird das Arbeitsgerät 2 deaktiviert.

Je nach Anordnung des Lichtgitters und Ausbildung des Gefahrenbereichs können von einzelnen Strahlachsen des Lichtgitters auch nicht sicherheitsrelevante Bereiche erfasst werden. Eine Generierung eines Objektfeststellungssignals "Objekt erkannt" in diesem Bereich würde zu einem unnötigen Abschalten des Lichtgitters führen. Daher können als Eingangssignale sogenannte Blanking-Zonen in das Lichtgitter eingegeben werden, mit welchen die nicht sicherheitskritische Bereiche erfassenden Strahlachsen des Lichtgitters ausgeblendet werden, so dass bei einem Objekteingriff in eine Blanking-Zone kein entsprechendes Objektfeststellungssignal generiert wird.

In diesem Fall sind für die Slaves bildenden Ein-/Ausgangsstufen 10 nicht nur Codes für Ausgangssignale sondern auch Codes für Eingangssignale vorgegeben. Die von der Ein-/Ausgangsstufe 10 zum Sicherheitsmonitor 9 gesendeten Codes kodieren im vorliegenden Fall die Schaltsignale "Arbeitsgerät aktiviert" oder "Arbeitsgerät deaktiviert". Die vom Sicherheitsmonitor 9 zu einer Ein-/Ausgangsstufe 10 gesendeten Codes kodieren die unterschiedlichen Blanking-Zonen.

Bei dieser Konfiguration kann ein Arbeitsgerät 2 unmittelbar über die Ein-/Ausgangsstufe 10 oder über den Sicherheitsmonitor 9, der gegebenenfalls eine weitere Ausgangsstufe 3 oder eine Ein-/Ausgangsstufe 10 ansteuert, aktiviert und deaktiviert werden.

In einer weiteren Ausführungsform kann die Ein-/Ausgangsstufe 10 von einem Flächendistanzsensor gebildet sein, mittels dessen Objekte in einer Ebene geortet werden können. Als Parameter sind in dem Flächendistanzsensor verschiedene Schutzfelder gespeichert. In dem Flächendistanzsensor wird applikationsspezifisch ein bestimmtes Schutzfeld ausgewählt. Dann wird mit dem Flächendistanzsensor erfasst, ob sich ein Objekt im Schutzfeld befindet oder nicht.

Das dabei generierte Objektfeststellungssignal bildet wiederum das Schaltsignal für ein Arbeitsgerät 2. Dabei wird das Arbeitsgerät 2 nur dann aktiviert, wenn sich kein Objekt im Schutzfeld befindet. Ansonsten wird das Arbeitsgerät 2 deaktiviert.

In diesem Fall kodieren die von der Ein-/Ausgangsstufe 10 zum Sicherheitsmonitor 9 gesendeten Codes die Schaltsignale "Arbeitsgerät aktiviert" oder "Arbeitsgerät deaktiviert". Die vom Sicherheitsmonitor 9 zur Ein-/Ausgangsstufe 10 gesendeten Codes kodieren die unterschiedlichen Schutzfelder.

In Figur 3 ist das Schema der Datenübertragung zwischen dem Master 4, dem Sicherheitsmonitor 9 und dem als Ein-/Ausgangsstufe 10 ausgebildeten Slave dargestellt.

Die Vereinbarung der Codes und Adressen der einzelnen Busteilnehmer erfolgt analog zur Ausführungsform gemäß Figur 2 vor Inbetriebnahme des Bussystems.

Weiterhin erfolgt in Übereinstimmung mit der Ausführungsform gemäß Figur 2 die Ansteuerung der Ein-/Ausgangsstufe 10 über den Sicherheitsmonitor 9 mit dem SR1 Aufruf als Antwort auf den Master-Request-Aufruf MR1, worauf der Slave als Antwort auf den zweiten Master-Request-Aufruf MR2 mit der Antwort SR2 das Kontrollergebnis ermittelt.

Auf diese Weise werden die Schaltsignale der Ein-/Ausgangsstufe 10 zur Aktivierung oder Deaktivierung des Arbeitsgerätes 2 vorgegeben. Weiterhin können auf diese Weise die Ein-/Ausgangsstufe 10 durch Vorgabe spezifischer Blanking-Zonen bzw. spezifischen Schutzfeldeinstellungen vorgegeben werden.

In Erweiterung zur Ausführungsform gemäß Figur 2 werden bei der Konfiguration gemäß Figur 3 über den Aufruf SR2 Input Code Eingangssignale aus der Ein-/Ausgangsstufe 10 eingelesen. Hierzu gehören die aktuell ermittelten Objektfeststellungssignale sowie der aktuelle Status der eingestellten Blanking-Zone bzw. des aktuell eingestellten Schutzfeldes.

In Abhängigkeit dieser Eingangsgrößen einer Ein-/Ausgangsstufe 10 können im Sicherheitsmonitor 9 Ausgangssignale generiert werden, um als Parameter beispielsweise die Blanking-Zonen oder Schutzfelder anderer Ein-/Ausgangsstufen 10 in vorgegebener Weise zu ändern.

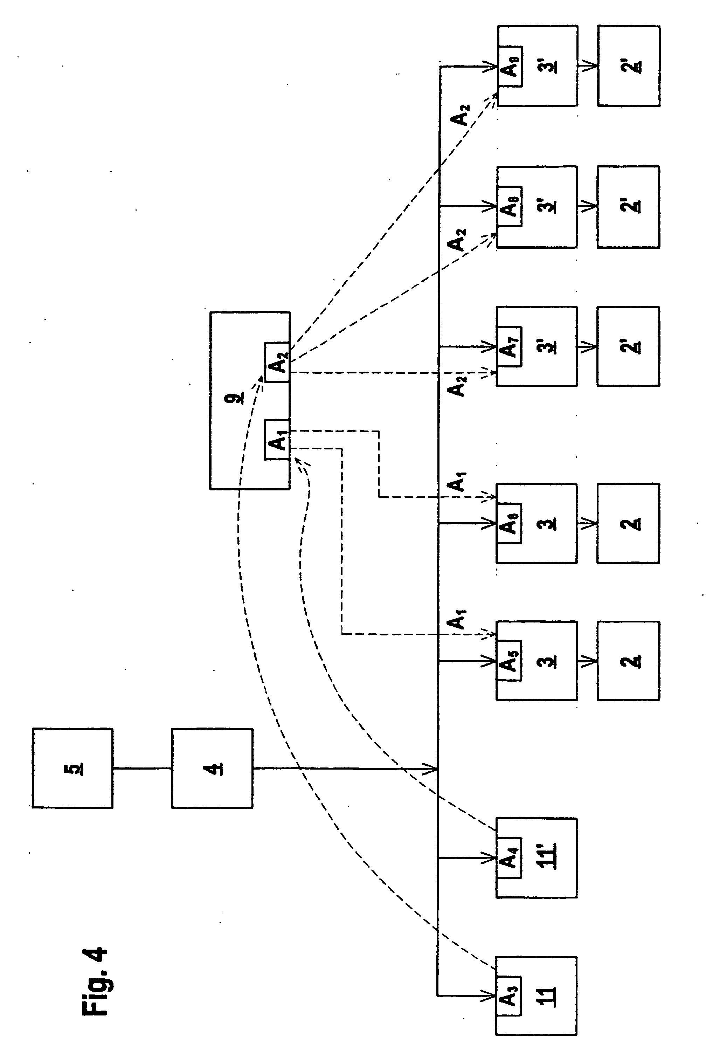

Figur 4 zeigt die Funktionsweise einer zweiten Ausführungsform der erfindungsgemäßen Sicherheitsschalteranordnung 1. Die Sicherheitsschalteranordnung 1 ist wiederum von einem Master-Slave-Bussystem gebildet, welches von einem Master 4 gesteuert werden. An den Master 4 ist wiederum eine SPS-Steuerung 5 angeschlossen. Zudem ist ein redundanter Sicherheitsmonitor 9 vorgesehen. Im Unterschied zu der Ausführungsform gemäß Figur 1 weist der Sicherheitsmonitor 9 im vorliegenden Fall zwei Adressen A₁, A₂ auf. Prinzipiell können auch zwei separate Sicherheitsmonitore 9 mit jeweils einer Adresse vorgesehen sein.

Weiterhin sind als Slaves mehrere Ausgangsstufen 3, 3' vorgesehen, die analog zur Ausführungsform gemäß Figur 1 von Relais gebildet sind, die den Betrieb von Arbeitsgeräten 2, 2' bildenden Motoren steuern. Die Motoren dienen beispielsweise zum Antrieb von Komponenten einer Förderstrecke.

Weiterhin sind bei der Anordnung gemäß Figur 4 als Slaves zwei Eingangsstufen 11, 11' vorgesehen. Die Eingangsstufen 11, 11' sind im vorliegenden Fall als Not-Aus-Schalter ausgebildet. Allgemein sind die Eingangsstufen 11, 11' von Sensoren gebildet.

Die Ausgangsstufen 3, 3' sowie die nachgeordneten Arbeitsgeräte 2, 2' sind in zwei Gruppen unterteilt.

Die erste Gruppe von Ausgangsstufen 3 und Arbeitsgeräten 2 wird über SR1 Aufrufe gemäß den Figuren 2 bzw. 3 unter der ersten Adresse A₁ des Sicherheitsmonitors 9 angesteuert, d.h. die Ausgangsstufen 3 hören nur die unter der Adresse A₁ ausgesendeten Aufrufe SR1 des Sicherheitsmonitors 9 mit, wobei die Kontrollergebnisse der Ausgangsstufen 3 wieder über SR2 Aufrufe rückgemeldet werden.

Die zweite Gruppe von Ausgangsstufen 3' und Arbeitsgeräten 2' wird über SR1 Aufrufe gemäß den Figuren 2 und 3 unter der zweiten Adresse A₂ des Sicherheitsmonitors 9 angesteuert, d.h. die Ausgangsstufen 3' hören nur die unter der Adresse A₂ ausgesendeten Aufrufe SR1 des Sicherheitsmonitor 9 mit, wobei die Kontrollergebnisse der Ausgangsstufen 3' wieder über SR2 Aufrufe rückgemeldet werden.

Die Ansteuerung der ersten Gruppe der Ausgangsstufen 3 erfolgt dabei in Abhängigkeit der von der ersten Eingangsstufe 11 generierten Eingangssignale. Dabei erfolgt eine Freigabe des Betriebs der Arbeitsgeräte 2 über die Ausgangsstufen 3 nur dann, wenn der die Eingangsstufe 11 bildende Not-Aus-Schalter nicht betätigt ist.

Ebenso erfolgt die Ansteuerung der zweiten Gruppe der Ausgangsstufen 3' in Abhängigkeit der von der zweiten Eingangsstufe 11' generierten Eingangssignale. Dabei erfolgt eine Freigabe des Betriebs der Arbeitsgeräte 2' über die Ausgangsstufen 3' nur dann, wenn der die Eingangsstufe 11' bildende Not-Aus-Schalter nicht betätigt ist

Ansonsten erfolgt der Betrieb der Sicherheitsschalteranordnung 1 gemäß Figur 4 analog zur Ausführungsform gemäß Figur 1.

### Bezugszeichenliste

- (1): Sicherheitsschalteranordnung
- (2, 2'): Arbeitsgerät
- (3, 3'): Ausgangsstufe
- (4): Master
- (5): SPS-Steuenmg
- (6): Busleitung
- (7): Analogschaltung
- (8): Schnittstellenbaustein
- (9): Sicherheitsmonitor
- (10): Ein-/Ausgangsstufe
- (11, 11'): Eingangsstufe

## Patentansprüche

1. Sicherheitsschalteranordnung mit einer vorgegebenen Anzahl von Schaltsignalen generierenden Ausgangsstufen (3, 3'), wobei in Abhängigkeit der Schaltsignale an die Ausgangsstufen (3, 3') angeschlossene Arbeitsgeräte (2, 2') aktivierbar oder deaktivierbar sind, und wobei die Ausgangsstufen (3, 3') Slaves eines nach dem Master-Slave-Prinzip arbeitenden Bussystems bilden, welchem ein Sicherheitsmonitor (9) zum Abhören der über das Bussystem übertragenen Signale zugeordnet ist, **dadurch gekennzeichnet, dass** die Ausgangsstufen (3, 3') in Abhängigkeit von im Sicherheitsmonitor (9) hinterlegten Codes steuerbar sind, wobei auf einen vom Master (4) an den Sicherheitsmonitor (9) gesendeten Master-Request-Aufruf (MR 1) ein Code als Antwort (SR1) von dem Sicherheitsmonitor (9) an den Master (4) gesendet und von den Slaves mitgehört und dabei in diese eingelesen wird, und dass in den jeweiligen Slaves der empfangene Code kontrolliert wird, wobei das Ergebnis der Kontrolle als Antwort (SR2) auf einen zweiten Master-Request-Aufruf (MR2) des Masters (4) an diesen zurückgesendet und vom Monitor mitgehört wird.

2. Sicherheitsschalteranordnung nach Anspruch 1, **dadurch gekennzeichnet, dass** die Ausgangsstufen (3, 3') in Abhängigkeit der eingelesenen Codes nur dann aktiviert sind, wenn in allen Ausgangsstufen (3,3') die eingelesenen Codes mit vorgegebenen Sollwerten übereinstimmen.

3. Sicherheitsschalteranordnung nach Anspruch 2, **dadurch gekennzeichnet, dass** über den Sicherheitsmonitor (9) sämtliche Ausgangsstufen (3, 3') deaktiviert werden, falls wenigstens eine Ausgangsstufe (3, 3') ein negatives Kontrollergebnis als Antwort (SR2) an den Master (4) sendet.

4. Sicherheitsschalteranordnung nach einem der Ansprüche 1 - 3, **dadurch gekennzeichnet, dass** mit den Codes unterschiedliche Schaltsignale für die Ausgangsstufen (3, 3') generierbar sind.

5. Sicherheitsschalteranordnung nach einem der Ansprüche 1 - 4, **dadurch gekennzeichnet, dass** dem Sicherheitsmonitor (9) eine Adresse zugewiesen ist, unter welcher dieser den Master-Request-Aufruf (MR1) empfängt, und dass die den Code enthaltende Antwort (SR1) in alle Ausgangsstufen (3, 3') eingelesen wird.

6. Sicherheitsschalteranordnung nach einem der Ansprüche 1 - 4, **dadurch gekennzeichnet, dass** dem Sicherheitsmonitor (9) mehrere Adressen zugewiesen sind, unter welchen dieser unterschiedliche Master-Request-Aufrufe (MR1) empfängt, und dass die unterschiedliche Codes enthaltenden Antworten (SR1) in verschiedene Gruppen von Ausgangsstufen (3, 3') eingelesen werden.

7. Sicherheitsschalteranordnung nach einem der Ansprüche 1 - 6, **dadurch gekennzeichnet, dass** an das Bussystem Slaves bildendende Eingangsstufen (11, 11') angeschlossen sind, wobei die von den Eingangsstufen (11, 11') generierten Eingangssignale in den Sicherheitsmonitor (9) eingebbar sind.

8. Sicherheitsschalteranordnung nach einem der Ansprüche 1 - 7, **dadurch gekennzeichnet, dass** an das Bussystem Slaves bildende Ein-/Ausgangsstufen (10) angeschlossen sind, wobei die von den Ein-/Ausgangsstufen (10) generierten Eingangssignale in den Sicherheitsmonitor (9) eingebbar sind.

9. Sicherheitsschalteranordnung nach einem der Ansprüche 7 oder 8, **dadurch gekennzeichnet, dass** die Eingangssignale in Form von Codes in den Sicherheitsmonitor (9) eingebbar sind.

10. Sicherheitsschalteranordnung nach einem der Ansprüche 7 - 9, **dadurch gekennzeichnet, dass** der Sicherheitsmonitor (9) Ausgangsstufen (3, 3') in Abhängigkeit von Eingangssignalen von Eingangsstufen (11, 11') und/oder von Ein/Ausgangsstufen (10) ansteuert.

11. Sicherheitsschalteranordnung nach einem der Ansprüche 1 - 10, **dadurch gekennzeichnet, dass** der Sicherheitsmonitor (9) einen redundanten Aufbau aufweist.

12. Sicherheitsschalteranordnung nach Anspruch 11, **dadurch gekennzeichnet, dass** der Sicherheitsmonitor (9) von einer zweikanaligen Mikroprozessoreinheit gebildet ist.

13. Sicherheitsschalteranordnung nach einem der Ansprüche 1- 12, **dadurch gekennzeichnet, dass** die Slaves einen redundanten Aufbau aufweisen.

14. Sicherheitsschalteranordnung nach Anspruch 13, **dadurch gekennzeichnet, dass** als Ausgangsstufen (3, 3') Aktoren vorgesehen sind.

15. Sicherheitsschalteranordnung nach Anspruch 14, **dadurch gekennzeichnet, dass** die Aktoren als Relais ausgebildet sind.

16. Sicherheitsschalteranordnung nach einem der Ansprüche 13 oder 14, **dadurch gekennzeichnet, dass** in den Ausgangsstufen (3, 3') jeweils eine Wiederanlaufsperre integriert ist.

17. Sicherheitsschalteranordnung nach einem der Ansprüche 14 - 16, **dadurch gekennzeichnet, dass** das Ausgangssignal einer Ausgangsstufe (3, 3') von einer Kombination eines im Sicherheitsmonitor (9) generierten Freigabesignals und eines den Betrieb eines Arbeitsgeräts (2, 2') definierenden Steuersignals einer an den Master angeschlossenen Steuerung gebildet ist.

18. Sicherheitsschalteranordnung nach einem der Ansprüche 12 - 17, **dadurch gekennzeichnet, dass** als Eingangsstufen (11, 11) Sensoren vorgesehen sind.

19. Sicherheitsschalteranordnung nach Anspruch 18, **dadurch gekennzeichnet, dass** die Sensoren von Not-Aus-Schaltern gebildet sind.

20. Sicherheitsschalteranordnung nach einem der Ansprüche 12 - 19, **dadurch gekennzeichnet, dass** als Ein-/Ausgangsstufen (10) Sensoren vorgesehen sind.

21. Sicherheitsschalteranordnung nach Anspruch 20, **dadurch gekennzeichnet, dass** die Sensoren von Lichtgittern gebildet sind.

22. Sicherheitsschalteranordnung nach Anspruch 21, **dadurch gekennzeichnet, dass** die Sensoren von optischen Flächendistanzsensoren gebildet sind.

23. Sicherheitsschalteranordnung nach einem der Ansprüche 14 - 22, **dadurch gekennzeichnet, dass** das Bussystem als Sensor-Aktor-Bussystem ausgebildet ist.

## Claims

1. Safety switching arrangement with a predetermined number of output stages (3, 3') generating switching signals, wherein operating apparatus (2, 2') connected to the output stages (3, 3') are activatable or deactivatable in dependence on the switching signals and wherein the output stages (3, 3') form slaves of a bus system which operates according to the master/slave principle and with which a safety monitor (9) for monitoring the signals transmitted by way of the bus system is associated, **characterised in that** the output stages (3, 3') are controllable in dependence on codes filed in the safety monitor (9), wherein a code as response (SR1) is sent from the safety monitor (9) to the master (4) on a master-request request (MR1) transmitted from the master (4) to the safety monitor (9) and is monitored by the slaves and **in that** case read into these and that the received code is checked in the respective slaves, wherein the result of the check is sent back as an response (SR2) on a second master-request request (MR2) of the master (4) to this and is monitored by the monitor.

2. Safety switching arrangement according to claim 1, **characterised in that** the output stages (3, 3') are activated in dependence on the read-in codes only when the read-in codes corresponds with predetermined target values in all output stages (3, 3').

3. Safety switching arrangement according to claim 2, **characterised in that** all output stages (3, 3') are deactivated by way of the safety monitor (9) if at least one output stage (3, 3') sends a negative check result as response (SR2) to the master (4).

4. Safety switching arrangement according to one of claims 1 to 3, **characterised in that** different switching signals for the output stages (3, 3') can be generated by the codes.

5. Safety switching arrangement according to one of claims 1 to 4, **characterised in that** there is allocated to the safety monitor (9) an address under which this receives the master-request request (MR1) and that the response (SR1) containing the code is read-in into all output stages (3, 3').

6. Safety switching arrangement according to one of claims 1 to 4, **characterised in that** there are allocated to the safety monitor (9) several addresses under which this receives different master-request requests (MR1) and that the responses (SR1) containing the different codes are read-in into different groups of output stages (3, 3').

7. Safety switching arrangement according to one of claims 1 to 6, **characterised in that** input stages (11, 11') forming the slaves are connected with the bus system, wherein the input signals generated by the input stages (11, 11') can be input into the safety monitor (9).

8. Safety switching arrangement according to one of claims 1 to 7, **characterised in that** input/output stages (10) forming slaves are connected with the bus system, wherein the input signals generated by the input/output stages (10) can be input into the safety monitor (9).

9. Safety switching arrangement according to one of claims 7 and 8, **characterised in that** the input signals can be input into the safety monitor (9) in the form of codes.

10. Safety switching arrangement according to one of claims 7 to 9, **characterised in that** the safety monitor (9) controls output stages (3, 3') in dependence on input signals of input stages (11, 11') and/or of input/output stages (10).

11. Safety switching arrangement according to one of claims 1 to 10, **characterised in that** the safety monitor (9) has a redundant mode of construction.

12. Safety switching arrangement according to claim 11, **characterised in that** the safety monitor (9) is formed by a two-channel microprocessor unit.

13. Safety switching arrangement according to one of claims 1 to 12, **characterised in that** the slaves have a redundant mode of construction.

14. Safety switching arrangement according to claim 13, **characterised in that** actuators are provided as output stages (3, 3').

15. Safety switching arrangement according to claim 14, **characterised in that** the actuators are constructed as relays.

16. Safety switching arrangement according to one of claims 13 and 14, **characterised in that** a respective restart block is integrated into each of the output stages (3, 3').

17. Safety switching arrangement according to one of claims 14 to 16, **characterised in that** the output signal of an output stage (3, 3') is formed by a combination of a release signal generated in the safety monitor (9) and a control signal, which defines the operation of an operating apparatus (2, 2'), of a control connected with the master.

18. Safety switching arrangement according to one of claims 12 to 17, **characterised in that** sensors are provided as input stages (11, 11').

19. Safety switching arrangement according to claim 18, **characterised in that** the sensors are formed by emergency 'off' switches.

20. Safety switching arrangement according to one of claims 12 to 19, **characterised in that** sensors are provided as input/output stages (10).

21. Safety switching arrangement according to claim 20, **characterised in that** the sensors are formed by light gratings.

22. Safety switching arrangement according to claim 21, **characterised in that** the sensors are formed by optical area distance sensors.

23. Safety switching arrangement according to one of claims 14 to 22, **characterised in that** the bus system is constructed as a sensor/actuator bus system.

## Revendications

1. Système ou arrangement d'interrupteur(s) de sécurité comportant un nombre prédéfini d'étages de sortie (3, 3') générant des signaux de commutation, des équipements (2, 2') reliés aux étages de sortie (3, 3') étant activables ou désactivables en fonction des signaux de commutation et les étages de sortie (3, 3') formant des esclaves d'un système de bus fonctionnant selon le principe maître-esclave, auquel est associé un moniteur de sécurité (9) pour l'écoute des signaux transmis via le système de bus, **caractérisé par le fait que** les étages de sortie (3, 3') sont commandés en fonction de codes enregistrés dans le moniteur de sécurité (9), que, sur un appel Master Request (MR1) envoyé par le maître (4) au moniteur de sécurité (9), un code est envoyé comme réponse (SR1) par le moniteur de sécurité (9) au maître (4), écouté par les esclaves et lu dans ceux-ci, et que le code reçu est contrôlé dans les différents esclaves, le résultat du contrôle étant renvoyé au maître (4) comme réponse (SR2) à un deuxième appel Master Request (MR2) de celui-ci et écouté par le moniteur.

2. Système d'interrupteurs de sécurité selon la revendication 1, **caractérisé par le fait que** les étages de sortie (3, 3') ne sont activés en fonctions des codes lus que si les codes lus coïncident avec des valeurs nominales prédéfinies dans tous les étages de sortie (3, 3').

3. Système d'interrupteurs de sécurité selon la revendication 2, **caractérisé par le fait que** tous les étages de sortie (3, 3') sont désactivés par le moniteur de sécurité (9) si au moins un étage de sortie (3, 3') envoie au maître (4) un résultat de contrôle négatif comme réponse (SR2).

4. Système d'interrupteurs de sécurité selon l'une des revendications 1 à 3, **caractérisé par le fait qu'**il est possible de générer différents signaux de commutation pour les étages de sortie (3, 3') avec les codes.

5. Système d'interrupteurs de sécurité selon l'une des revendications 1 à 4, **caractérisé par le fait que** l'on alloue au moniteur de sécurité (9) une adresse à laquelle celui-ci reçoit l'appel Master Request (MR1) et que la réponse (SR1) contenant le code est lue dans tous les étages de sortie (3, 3').

6. Système d'interrupteurs de sécurité selon l'une des revendications 1 à 4, **caractérisé par le fait que** l'on alloue au moniteur de sécurité (9) plusieurs adresses auxquelles celui-ci reçoit différents appels Master Request (MR1) et que les réponses (SR1) contenant les différents codes sont lues dans différents groupes d'étages de sortie (3, 3').

7. Système d'interrupteurs de sécurité selon l'une des revendications 1 à 6, **caractérisé par le fait que** des étages d'entrée (11, 11') formant des esclaves sont reliés au système de bus, les signaux d'entrée générés par les étages d'entrée (11, 11') pouvant être entrés dans le moniteur de sécurité (9).

8. Système d'interrupteurs de sécurité selon l'une des revendications 1 à 7, **caractérisé par le fait que** des étages d'entrée/sortie (10) formant des esclaves sont reliés au système de bus, les signaux d'entrée générés par les étages d'entrée/sortie (10) pouvant être entrés dans le moniteur de sécurité (9).

9. Système d'interrupteurs de sécurité selon l'une des revendications 7 ou 8, **caractérisé par le fait que** les signaux d'entrée peuvent être entrés sous forme de codes dans le moniteur de sécurité (9).

10. Système d'interrupteurs de sécurité selon l'une des revendications 7 à 9, **caractérisé par le fait que** le moniteur de sécurité (9) commande des étages de sortie (3, 3') en fonction de signaux d'entrée d'étages d'entrée (11, 11') et/ou d'étages d'entrée/sortie (10).

11. Système d'interrupteurs de sécurité selon l'une des revendications 1 à 10, **caractérisé par le fait que** le moniteur de sécurité (9) présente une structure redondante.

12. Système d'interrupteurs de sécurité selon la revendication 11, **caractérisé par le fait que** le moniteur de sécurité (9) est formé d'une unité de microprocesseurs à deux canaux.

13. Système d'interrupteurs de sécurité selon l'une des revendications 1 à 12, **caractérisé par le fait que** les esclaves présentent une structure redondante.

14. Système d'interrupteurs de sécurité selon la revendication 13, **caractérisé par le fait qu'**il est prévu des actionneurs comme étages de sortie (3, 3').

15. Système d'interrupteurs de sécurité selon la revendication 14, **caractérisé par le fait que** les actionneurs sont constitués de relais.

16. Système d'interrupteurs de sécurité selon l'une des revendications 13 ou 14, **caractérisé par le fait qu'**un dispositif de blocage de reprise est intégré dans chaque étage de sortie (3, 3').

17. Système d'interrupteurs de sécurité selon l'une des revendications 14 à 16, **caractérisé par le fait que** le signal de sortie d'un étage de sortie (3, 3') est formé d'une combinaison d'un signal de validation généré dans le moniteur de sécurité (9) et d'un signal de commande d'une commande reliée au maître, définissant le fonctionnement d'un équipement (2, 2').

18. Système d'interrupteurs de sécurité selon l'une des revendications 12 à 17, **caractérisé par le fait qu'**il est prévu des capteurs comme étages d'entrée (11, 11').

19. Système d'interrupteurs de sécurité selon la revendication 18, **caractérisé par le fait que** les capteurs sont formés d'interrupteurs d'arrêt d'urgence.

20. Système d'interrupteurs de sécurité selon l'une des revendications 12 à 19, **caractérisé par le fait qu'**il est prévu des capteurs comme étages d'entrée/sortie (10).

21. Système d'interrupteurs de sécurité selon la revendication 20, **caractérisé par le fait que** les capteurs sont formés de barrières photoélectriques.

22. Système d'interrupteurs de sécurité selon la revendication 21, **caractérisé par le fait que** les capteurs sont formés de capteurs de distance plane optiques.

23. Système d'interrupteurs de sécurité selon l'une des revendications 14 à 22, **caractérisé par le fait que** le système de bus est constitué d'un système de bus capteur/actionneur.
